# EUROPÄISCHE PATENTSCHRIFT

(11) **EP 3 305 568 B1**
(45) Veröffentlichungstag und Bekanntmachung des Hinweises auf die Patenterteilung: **03.07.2019**
(21) Anmeldenummer: 17194801.1
(22) Anmeldetag: 04.10.2017
(51) Int. Cl.: B60J 5/06

(54) **RATSCHENSPANNVORRICHTUNG SOWIE ADAPTERTEIL FÜR EINE AUFWICKELWELLE FÜR EINE LKW-VERKLEIDUNG**
RATCHET DEVICE AND ADAPTER PART FOR A COILING SHAFT FOR A TRUCK CLADDING
DISPOSITIF À CLIQUET AINSI QUE PIÈCE D'ADAPTATION POUR UN ARBRE D'ENROULEMENT POUR UN CARÉNAGE DU POIDS LOURD

(30) Priorität: 05.10.2016 DE 102016118865
(43) Veröffentlichungstag der Anmeldung: 11.04.2018
(73) Patentinhaber: PWP SA, CH-1530 Payerne (CH)
(72) Erfinder: Gijsbers, Erik, 3232 Ins (CH); Suer, Arne, 42859 Remscheid (DE)
(74) Vertreter: Müller, Enno

(56) Entgegenhaltungen:
- EP-A1- 1 378 385
- DE-A1-102006 044 207
- US-A- 5 943 924
- US-A1- 2013 039 696

## Beschreibung

### Gebiet der Technik

Die Erfindung betrifft zunächst eine Ratschenspannvorrichtung nach den Merkmalen des Oberbegriffs des Anspruches 1.

Weiter betrifft die Erfindung ein Adapterteil nach den Merkmalen des Oberbegriffs des Anspruches 11.

### Stand der Technik

Insbesondere im Bereich von LKW-Aufbauten sind Ratschenspannvorrichtungen sowie Adapterteile bekannt. Über eine Aufwickelwelle kann bspw. eine LKW-Plane auf- und abgewickelt werden. Die Aufwickelwelle ist zumindest über ein endseitig drehfest mit der Aufwickelwelle verbundenes Adapterteil mit einer Antriebswelle verbunden. Letztere wirkt über das Adapterteil drehantreibend auf die Aufwickelwelle. Es wird zum Stand der Technik beispielsweise auf die EP 1 378 385 B2 verwiesen.

Die Aufwickelwelle wird bevorzugt angetrieben über eine Ratschenspannvorrichtung. Derartige Ratschenspannvorrichtungen sind bereits in verschiedener Hinsicht bekannt geworden. Es wird bspw. auf die EP 2 860 062 A2 verwiesen. Mitunter wird es als ungünstig angesehen, dass das Adapterteil mit der Aufwickelwelle, etwa durch Abstemmen mit einem Schraubendreher, vergleichsweise einfach von der Antriebswelle entkoppelt werden kann. Hierdurch kann eine gewünschte Zollsicherheit gefährdet sein.

Im Hinblick auf eine Zollsicherung einer derartigen Zusammenfassung bzw. einer derartigen Ratschenspannvorrichtung ist bereits die DE 10 2015 007 288 A1 bekannt geworden. Die hieraus bekannte Lösung sieht eine Formschlussverbindung durch eine Rille oder eine überstehende Rippe an dem Adapter mit einem Sicherungsteil vor, das seinerseits wiederum in der Ratsche selbst gehaltert ist.

Zum Stand der Technik ist weiter auf die US 5 943 925 A zu verweisen. Bezüglich eines Handwerkzeuges ist hieraus ein Adapterteil bekannt, das im Sinne einer Verlängerung zwischengeschaltet sein kann. Dieses Adapterteil weist zwei gegenüberliegende Enden mit jeweils einer Ausgestaltung zur Formschlussverbindung auf, welche Enden mit einer gleichmäßig durchgehenden Querschnittsfläche ausgebildet sind. Zwischen den Enden ist ein Verjüngungsbereich ausgebildet.

Weiter ist zum Stand der Technik auch noch auf die US 2013/0039696 A1 zu verweisen.

### Zusammenfassung der Erfindung

Ausgehend von dem dargelegten Stand der Technik stellt sich der Erfindung die Aufgabe, eine Ratschenspannvorrichtung wie auch ein Adapterteil anzugeben, die im Hinblick auf einen sicheren Zusammenhalt günstig ausgebildet sind.

Diese Aufgabe ist hinsichtlich der Ratschenspannvorrichtung beim Gegenstand des Anspruches 1 gelöst, wobei darauf abgestellt ist, dass das frei Ende der Antriebswelle von einem Hülsenteil umgeben ist.

Diese Aufgabe ist hinsichtlich des Adapterteils beim Gegenstand des Anspruches 11 gelöst, wobei darauf abgestellt ist, dass das Adapterende einen Verjüngungsabschnitt aufweist, der in Richtung auf ein freies Ende des Adapterendes hin eine kontinuierliche Verringerung der quer der Achsausrichtung betrachteten Querschnittsfläche aufweist. Das Adapterende weist entsprechend gegenüber dem übrigen Adapterteilbereich eine reduzierte Querschnittserstreckung (quer zur Längserstreckung des Adapterteils betrachtet) auf. Es kann sich hierbei mit Bezug auf eine Längsmittelachse des Adapterteils um eine insgesamt konische Verjüngung handeln.

Das Hülsenteil kann mit einem der Teile, Adapterteil oder Antriebswelle, fest verbunden sein und das andere Teil übergreifen. In einer möglichen Ausgestaltung ist das Hülsenteil mit der Antriebswelle verbunden und übergreift das freie, formschlüssig mit der Antriebswelle verbundene Adapterende. Auch kann das Hülsenteil an der Ratschenspannvorrichtung, bspw. an einem Ratschen-Befestigungsteil, welches von dem Formschlussende der Antriebswelle durchsetzt ist, angeordnet sein.

Das Hülsenteil kann zugleich einen anschließenden Teilbereich des zugeordneten Endes der Antriebswelle umgeben. Das Hülsenteil weist eine Hülsenwandung auf, die bevorzugt konzentrisch zur Antriebswellenachse verläuft und das Formschlussende der Antriebswelle mit radialem Abstand umgibt.

Das Hülsenteil kann mit der Antriebswelle verbunden sein, insbesondere mit dieser drehfest verbunden. Zufolge der bei Nutzung drehfesten Formschlussverbindung zwischen Adapterteil und Antriebswelle ergibt sich so keine Relativverdrehung zwischen Hülsenteil und Adapterteil.

In einer möglichen, zudem bevorzugten, Ausgestaltung ist das Hülsenteil mit der Antriebswelle materialeinheitlich einteilig ausgebildet.

Die Aufwickelwelle kann fußseitig das Adapterteil aufweisen, wobei ein Adapterende mit dem freien Ende der Antriebswelle formschlüssig verbunden ist, unter Ausbildung einer Trennfuge zwischen einer Stirnfläche des Adapterendes und einer zugeordneten Stirnfläche des Endes der Antriebswelle.

Die Trennfuge zwischen Adapterteil und Antriebswelle bietet einen Angriffsbereich zum Ansetzen eines Hebels oder dergleichen, mittels welchem die Formschlussverbindung zwischen Adapterteil und Antriebswelle aufgehoben werden kann. Dies erweist sich beispielsweise problematisch bei zollgesicherten Ratschenspannvorrichtungen. Zufolge Aufhebung der Formschlussverbindung zwischen Adapterteil und Antriebswelle kann die Zollsicherung umgangen werden.

Die Trennfuge kann weiter durch das vorgesehene Hülsenteil umfasst sein, so dass ein radialer Zugang der zum Ansetzen eines Hebels oder dergleichen nötig ist, nicht mehr gegeben ist. Das Hülsenteil umfasst kragenartig den Trennfugenbereich und das der Trennfuge zugeordnete Ende des Adapterteils.

Der adapterteilseitige Verjüngungsabschnitt kann in einem Querschnitt quer zur Längserstreckung des Adapterteils bzw. quer zur Drehachse der Aufwickelwelle rund gestaltet sein, dies bevorzugt mit zum freien Ende hin kontinuierlich oder auch stufenweise abnehmendem Durchmesser.

Alternativ kann das Adapterende im Querschnitt auch eckig gestaltet sein, bspw. 3-, 4-, 5- oder 6-eckig bis hin zu 12-eckig oder 20-eckig oder mehr.

### Kurze Beschreibung der Zeichnungen

Nachstehend ist die Erfindung anhand der beigefügten Zeichnung erläutert, die aber lediglich Ausführungsbeispiele darstellt. Ein Teil, das nur bezogen auf eines der Ausführungsbeispiele erläutert ist und bei einem weiteren Ausführungsbeispiel aufgrund der dort herausgestellten Besonderheit nicht durch ein anderes Teil ersetzt ist, ist damit auch für dieses weitere Ausführungsbeispiel als jedenfalls mögliches vorhandenes Teil beschrieben. Auf der Zeichnung zeigt:
- Fig. 1: eine Draufsicht auf eine Ratschenspannvorrichtung mit einer Aufwickelwelle und einem Adapterteil in einer ersten Ausführungsform;

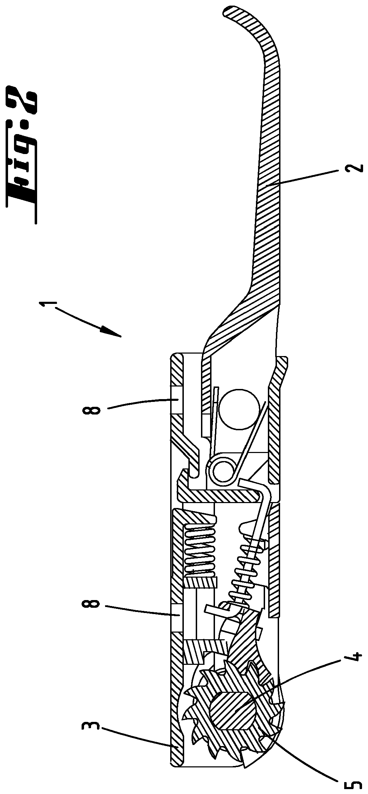

- Fig. 2: einen Längsschnitt durch die Spannratsche der Spannvorrichtung entlang der Linie II-II in Figur 1;
- Fig. 3: den Schnitt gemäß der Linie III-III in Figur 1;
- Fig. 4: das Adapterteil der ersten Ausführungsform in perspektivischer Einzeldarstellung mit hieran formschlussbefestigter Aufwickelwelle;
- Fig. 5: die Antriebswelle mit angeformtem Hülsenteil, die erste Ausführungsform betreffend;
- Fig. 6: den Querschnitt gemäß der Linie VI-VI in Figur 3;
- Fig. 7: eine der Figur 4 entsprechende perspektivische Darstellung, jedoch eine zweite Ausführungsform des Adapterteils betreffend;
- Fig. 8: die Antriebswelle mit Hülsenteil der zweiten Ausführungsform;
- Fig. 9: einen Querschnitt gemäß Figur 6, jedoch die zweite Ausführungsform gemäß den Figuren 7 und 8 betreffend.

### Beschreibung der Ausführungsformen

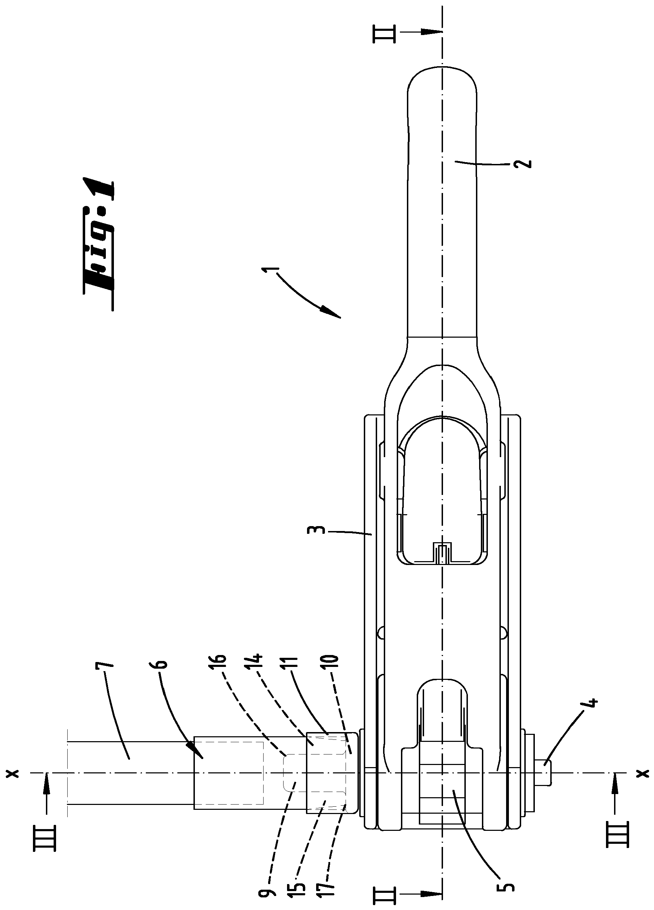

Dargestellt und beschrieben ist, zunächst mit Bezug zu Figur 1, eine Ratschenspannvorrichtung 1, die zum Spannen von Gegenständen, wie Gurte oder Planen, an LKW-Fahrzeugen üblicherweise eingesetzt wird.

Die Ratschenspannvorrichtung 1 weist einen Ratschenhebel 2 auf, der um eine geometrische Achse x schwenkbeweglich an einem Befestigungsteil 3 angelenkt ist.

Bestandteile der Ratschenspannvorrichtung 1 sind im Wesentlichen weiter eine Antriebswelle 4 und ein Ratschenzahnrad 5.

Über die Antriebswelle 4 ist eine endseitig mit einem Adapterteil 6 versehene Aufwickelwelle 7 um die Achse x drehbar.

Mittels des Befestigungsteils 3 wird die Ratschenspannvorrichtung 1 insgesamt an einem Chassis eines LKWs bspw. angebracht. Hierzu sind im Einzelnen in dem Befestigungsteil 3 bspw. Schraubverbindungslöcher 8 ausgebildet.

Bezüglich des Aufbaus und der Funktionsweise der Ratschenspannvorrichtung 1 wird in weiterer Einzelheit auch auf die EP 1 642 683 A2 verwiesen.

Das Ratschenzahnrad 5 kann, wie dargestellt, in dem Befestigungsteil 3 mittels der Antriebswelle 4 gelagert sein. Die Antriebswelle 4 weist ein Antriebsende 9 auf. Dieses ragt bezüglich des Befestigungsteils 3 in Achsrichtung der Antriebswelle 4 nach außen über und formt in den dargestellten Ausführungsbeispielen einen Vierkant-Dorn.

Zwischen dem nach außen überstehenden Antriebsende 9 und dem sich im Inneren des Befestigungsteiles 3 erstreckenden Achsabschnitt der Antriebswelle 4 ist ein radial vorstehender umlaufender Flansch 10 ausgebildet. Dieser erstreckt sich der Außenseite des Befestigungsteils 3 zugewandt.

An der Antriebswelle 4 ist weiter ein Hülsenteil 11 vorgesehen. Dieses kann, wie dargestellt, materialeinheitlich einteilig mit der Antriebswelle 4 ausgebildet sein, weiter insbesondere angeformt an dem Flansch 10.

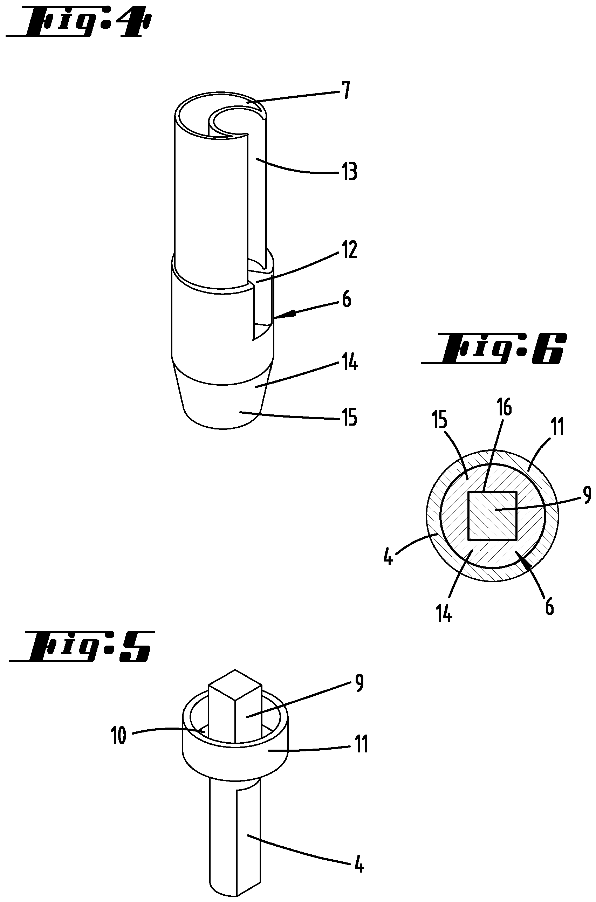

Die Hülsenwandung erstreckt sich mit Bezug auf einen Querschnitt gemäß Figur 6 konzentrisch zur Wellenachse x. Der Flansch 10 kann zugleich einen Hülsenteil-Boden formen.

Die axiale Erstreckungslänge des Hülsenteiles 11 ausgehend vom Flansch 10 kann, wie dargestellt, geringer bemessen sein als die diesbezügliche axiale Erstreckungslänge des hier als Vierkantdorn ausgebildeten Antriebsendes 9. Die axiale Erstreckungslänge des Hülsenteils 11 kann ein Zehntel oder mehr, bis hin zu bspw. neun Zehntel, der freien axialen Erstreckungslänge des Antriebsendes 9 betragen. Bevorzugt liegt die Erstreckung zwischen einem Viertel und drei Viertel der genannten axialen Erstreckungslänge des Antriebsendes 9. Abweichend hiervon kann die axiale Erstreckungslänge auch so gewählt sein, dass sie die Erstreckung des Antriebsendes 9 übertrifft.

Das hülsenartige Adapterteil 6 kann mit der formschlüssig hieran angeordneten und in axialer Verlängerung sich erstreckenden Aufwickelwelle 7 bspw. unter Nutzen einer hydraulischen Presseinrichtung formschlussverbunden sein, wobei weiter ein nach radial innen weisender Vorsprung 12 in eine angepasste, in Achsrichtung verlaufende Nut 13 der Aufwickelwelle 7 greift (vgl. bspw. Figur 4).

Die Aufwickelwelle 7 kann als Aluminiumprofil ausgebildet sein, wobei das Adapterteil 6 materialmäßig gegenüber der Aufwickelwelle 7 härter eingestellt sein kann. Bspw. kann es sich bei dem Adapterteil 6 um ein Stahlgussteil handeln.

Das Adapterteil 6 weist ein der Aufwickelwelle 7 abgewandtes, zur Formschlussverbindung mit der Antriebswelle 4 der Ratschenspannvorrichtung 1 ausgebildetes Adapterende 14 auf. Dieses Adapterende 14 formt einen Verjüngungsabschnitt 15. Es ergibt sich in dem Verjüngungsabschnitt 15 in dem dargestellten Ausführungsbeispiel eine in Richtung auf das freie Ende hin kontinuierliche Verringerung der quer zur Achsausrichtung betrachteten Querschnittsfläche.

Ausgehend von der Stirnfläche im Bereich des freien, der Aufwickelwelle 7 abgewandten Endes erstreckt sich in Achsrichtung eine Formschlussöffnung 16, welche querschnittsangepasst ist an das Antriebsende 9 der Antriebswelle 4, hier entsprechend einen Vierkant-Querschnitt aufweisend.

Die axiale Tiefe der Formschlussöffnung 16 ist angepasst an die axiale Länge des Antriebsendes 9.

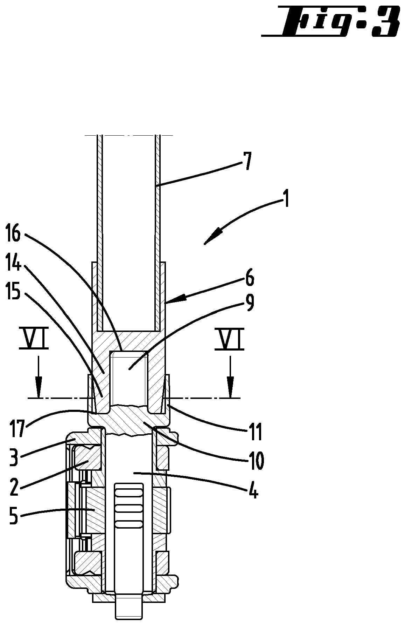

In der Formschlussstellung, wie diese bspw. in den Figuren 1 und 3 dargestellt ist, ergibt sich zwischen den zugeordneten Stirnflächen des Adapterendes 14 und der Antriebswelle 4 eine Trennfuge 17. Diese ist durch das Hülsenteil 11 sowohl in radialer Richtung mit Bezug zu der Achse x als auch in axialer Richtung überdeckt, so dass hierdurch der radiale Zugang zu der Trennfuge 17 gehindert ist. Es bietet sich keine Ansatzfläche oder Fuge, an welcher ein hebelartiges Werkzeug angesetzt werden kann, zur Axialverlagerung des Adapterteiles 6 mitsamt der Aufwickelwelle 7, um so die Aufwickelwelle 7 von der Antriebswelle 4 der Ratschenspannvorrichtung 1 zu trennen. Die konische Ausgestaltung des Adapterendes 14 trägt zu diesem Merkmal positiv bei.

Gemäß den Darstellungen in den Figuren 4 bis 6 kann der konisch sich verjüngende Bereich des Adapterteiles 6 im Querschnitt gemäß Figur 6 rund gestaltet sein. Die Wandungsinnenseite der Hülsenwandung ist angepasst an den Querschnitt im Verjüngungsabschnitt 15, entsprechend gemäß der ersten Ausführungsform ebenfalls kreisrund.

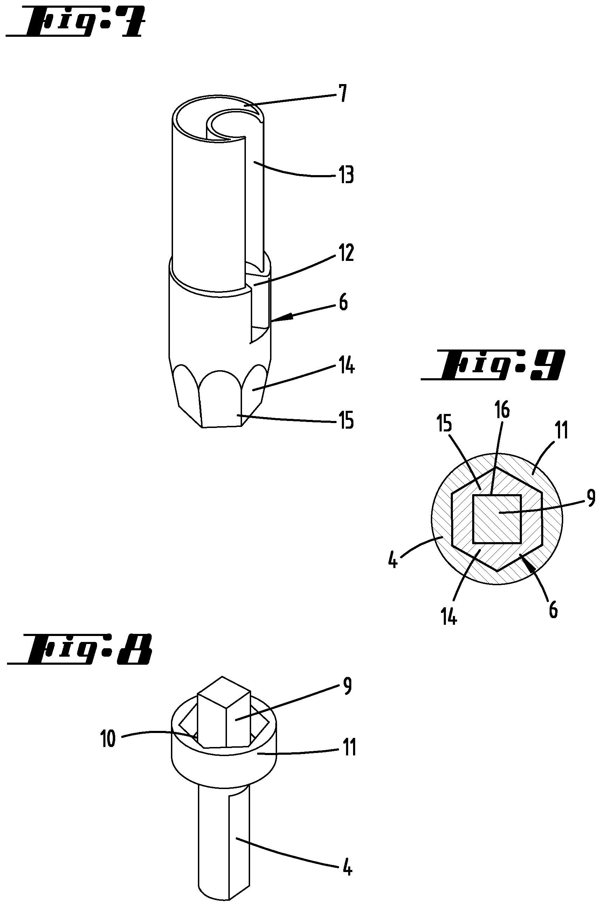

Die Darstellungen in den Figuren 7 bis 9 zeigen eine alternative Ausgestaltung, bei welcher der Verjüngungsabschnitt 15 im Querschnitt mehreckig gestaltet ist, hier 6-eckig. Die Wandungsinnenseite der Hülsenwandung ist auch hier bevorzugt angepasst an den Verjüngungsabschnitt-Querschnitt und weist entsprechend einen Mehrkant-Verlauf auf.

**Liste der Bezugszeichen**

| | | | |
|---|---|---|---|
| 1 | Ratschenspannvorrichtung | x | Wellenachse |
| 2 | Ratschenhebel | | |
| 3 | Befestigungsteil | | |
| 4 | Antriebswelle | | |
| 5 | Ratschenzahnrad | | |
| 6 | Adapterteil | | |
| 7 | Aufwickelwelle | | |
| 8 | Schraubverbindungslöcher | | |
| 9 | Antriebsende | | |
| 10 | Flansch | | |
| 11 | Hülsenteil | | |
| 12 | Vorsprung | | |
| 13 | Nut | | |
| 14 | Adapterende | | |
| 15 | Verjüngungsabschnitt | | |
| 16 | Formschlussöffnung | | |
| 17 | Trennfuge | | |

## Patentansprüche

1. Ratschenspannvorrichtung (1) für eine Aufwickelwelle (7) einer LKW-Verkleidung, mit einer Antriebswelle (4), die ein freies Ende aufweist, **dadurch gekennzeichnet, dass** das freie Ende der Antriebswelle (4) von einem Hülsenteil (11) umgeben ist.

2. Ratschenspannvorrichtung nach Anspruch 1, **dadurch gekennzeichnet, dass** das Hülsenteil (11) zugleich einen anschließenden Teilbereich des zugeordneten Endes der Antriebswelle (4) umgibt.

3. Ratschenspannvorrichtung nach einem der Ansprüche 1 oder 2, **dadurch gekennzeichnet, dass** das Hülsenteil (11) mit der Antriebswelle (4) verbunden ist.

4. Ratschenspannvorrichtung nach Anspruch 3, **dadurch gekennzeichnet, dass** das Hülsenteil (11) mit der Antriebswelle (4) materialeinheitlich einteilig ausgebildet ist.

5. Ratschenspannvorrichtung nach einem der vorhergehenden Ansprüche, **dadurch gekennzeichnet, dass** die Aufwickelwelle (7) fußseitig ein Adapterteil (6) aufweist, wobei ein Adapterende (14) mit dem freien Ende der Antriebswelle (4) formschlüssig verbunden ist, unter Ausbildung einer Trennfuge (17) zwischen einer Stirnfläche des Adapterendes (14) und einer zugeordneten Stirnfläche des Endes der Antriebswelle (4).

6. Ratschenspannvorrichtung nach Anspruch 5, **dadurch gekennzeichnet, dass** das Adapterende (14) von einem Hülsenteil (11) umgeben ist, das einen radialen Zugang zu der Trennfuge (17) hindert.

7. Ratschenspannvorrichtung nach einem der Ansprüche 1 oder 2, **dadurch gekennzeichnet, dass** die Aufwickelwelle (7) fußseitig ein Adapterteil (6) aufweist, wobei ein Adapterende (14) mit dem freien Ende der Antriebswelle (4) formschlüssig verbunden ist, unter Ausbildung einer Trennfuge (17) zwischen einer Stirnfläche des Adapterendes (14) und einer zugeordneten Stirnfläche des Endes der Antriebswelle (4) und dass das Hülsenteil (11) mit dem Adapterteil (6) fest verbunden ist und die Antriebswelle (4) übergreift.

8. Ratschenspannvorrichtung nach einem Ansprüche 5 bis 7, **dadurch gekennzeichnet, dass** das Adapterende (14) einen Verjüngungsabschnitt (15) aufweist.

9. Ratschenspannvorrichtung nach einem der Ansprüche 5 bis 8, **dadurch gekennzeichnet, dass** das Adapterende (14) im Querschnitt rund gestaltet ist.

10. Ratschenspannvorrichtung nach einem der Ansprüche 5 bis 8, **dadurch gekennzeichnet, dass** das Adapterende (14) im Querschnitt eckig gestaltet ist.

11. Adapterteil (6) für eine Aufwickelwelle (7) einer LKW-Verkleidung, wobei das Adapterteil (6) ein der Aufwickelwelle (7) abgewandtes, zur Formschlussverbindung mit einer Ratschenspannvorrichtung ausgebildetes Adapterende (14) aufweist, **dadurch gekennzeichnet, dass** das Adapterende (14) einen Verjüngungsabschnitt (15) aufweist, der in Richtung auf ein freies Ende des Adapterendes hin eine kontinuierliche Verringerung der quer der Achsausrichtung betrachteten Querschnittsfläche aufweist.

12. Adapterteil nach Anspruch 11, **dadurch gekennzeichnet, dass** das Adapterende (14) im Querschnitt rund gestaltet ist.

13. Adapterteil nach einem der Ansprüche 11, **dadurch gekennzeichnet, dass** das Adapterende (14) im Querschnitt eckig gestaltet ist.

## Claims

1. Ratchet tensioning device (1) for a winding shaft (7) of a heavy goods vehicle covering, comprising a drive shaft (4) which has a free end, **characterised in that** the free end of the drive shaft (4) is surrounded by a sleeve part (11).

2. Ratchet tensioning device according to claim 1, **characterised in that** the sleeve part (11) simultaneously surrounds an adjoining portion of the associated end of the drive shaft (4).

3. Ratchet tensioning device according to either claim 1 or claim 2, **characterised in that** the sleeve part (11) is connected to the drive shaft (4).

4. Ratchet tensioning device according to claim 3, **characterised in that** the sleeve part (11) is materially integral with the drive shaft (4).

5. Ratchet tensioning device according to any of the preceding claims, **characterised in that** the winding shaft (7) has an adapter part (6) at the foot end, an adapter end (14) being interlockingly connected to the free end of the drive shaft (4), forming a parting line (17) between an end face of the adapter end (14) and an associated end face of the end of the drive shaft (4).

6. Ratchet tensioning device according to claim 5, **characterised in that** the adapter end (14) is surrounded by a sleeve part (11) which prevents radial access to the parting line (17).

7. Ratchet tensioning device according to either claim 1 or claim 2, **characterised in that** the winding shaft (7) has an adapter part (6) at the foot end, an adapter end (14) being interlockingly connected to the free end of the drive shaft (4), forming a parting line (17) between an end face of the adapter end (14) and an associated end face of the end of the drive shaft (4), and **in that** the sleeve part (11) is rigidly connected to the adapter part (6) and extends over the drive shaft (4).

8. Ratchet tensioning device according to any of claims 5 to 7, **characterised in that** the adapter end (14) has a tapered portion (15).

9. Ratchet tensioning device according to any of claims 5 to 8, **characterised in that** the adapter end (14) has a round cross section.

10. Ratchet tensioning device according to any of claims 5 to 8, **characterised in that** the adapter end (14) has an angular cross section.

11. Adapter part (6) for a winding shaft (7) of a heavy goods vehicle covering, the adapter part (6) having an adapter end (14) that faces away from the winding shaft (7) and is designed to interlockingly connect to a ratchet tensioning device, **characterised in that** the adapter end (14) has a tapered portion (15) which has a continuous reduction in the cross-sectional area towards a free end of the adapter end when viewed transversely to the axis orientation.

12. Adapter part according to claim 11, **characterised in that** the adapter end (14) has a round cross section.

13. Adapter part according to claim 11, **characterised in that** the adapter end (14) has an angular cross section.

## Revendications

1. Dispositif tendeur à cliquet (1) pour un arbre d'enroulement (7) d'un carénage ou habillage de camion, comprenant un arbre d'entraînement (4) qui présente une extrémité libre, **caractérisé en ce que** l'extrémité libre de l'arbre d'entraînement (4) est entourée par un manchon (11).

2. Dispositif tendeur à cliquet selon la revendication 1, **caractérisé en ce que** le manchon (11) entoure simultanément une zone partielle adjacente de l'extrémité associée de l'arbre d'entraînement (4).

3. Dispositif tendeur à cliquet selon l'une des revendications 1 ou 2, **caractérisé en ce que** le manchon (11) est lié à l'arbre d'entraînement (4).

4. Dispositif tendeur à cliquet selon la revendication 3, **caractérisé en ce que** le manchon (11) est formée unitairement de matière en une seule pièce avec l'arbre d'entraînement (4).

5. Dispositif tendeur à cliquet selon l'une des revendications précédentes, **caractérisé en ce que** l'arbre d'enroulement (7) présente un élément adaptateur (6) du côté pied, dans lequel une extrémité d'adaptateur (14) est reliée par verrouillage de forme à l'extrémité libre de l'arbre d'entraînement (4) sous formation d'une jointure (17) entre une surface frontale de l'extrémité d'adaptation (14) et une surface frontale correspondante de l'extrémité de l'arbre d'entraînement (4).

6. Dispositif tendeur à cliquet selon la revendication 5, **caractérisé en ce que** l'extrémité d'adaptateur (14) est entourée d'un manchon (11) qui empêche un accès radial à la jointure (17).

7. Dispositif tendeur à cliquet selon l'une des revendications 1 ou 2, **caractérisé en ce que** l'arbre d'enroulement (7) présente un élément adaptateur (6) du côté pied, dans lequel une extrémité d'adaptateur (14) est reliée par verrouillage de forme à l'extrémité libre de l'arbre d'entraînement (4) sous formation d'une jointure (17) entre une surface frontale de l'extrémité d'adaptateur (14) et une surface frontale associée de l'extrémité de l'arbre d'entraînement (4) et **en ce que** le manchon (11) est lié fixement à l'élément adaptateur (6) et chevauche l'arbre d'entraînement (4).

8. Dispositif tendeur à cliquet selon l'une des revendications 5 à 7, **caractérisé en ce que** l'extrémité d'adaptateur (14) présente une partie à section décroissante (15).

9. Dispositif tendeur à cliquet selon l'une des revendications 5 à 8, **caractérisé en ce que** l'extrémité d'adaptateur (14) a une section transversale ronde.

10. Dispositif tendeur à cliquet selon l'une des revendications 5 à 8, **caractérisé en ce que** l'extrémité d'adaptateur (14) a une section transversale anguleuse.

11. Elément adaptateur (6) pour un arbre d'enroulement (7) d'un carénage ou habillage de camion, dans lequel l'élément adaptateur (6) présente une extrémité d'adapteur (14) à l'opposé de l'arbre d'enroulement (7) qui est conçue pour une liaison par verrouillage de forme avec un dispositif tendeur à cliquet, **caractérisé en ce que** l'extrémité d'adaptateur (14) présente une partie à section décroissante (15) qui, en direction d'une extrémité libre de l'extrémité d'adaptateur, présente une réduction continue de la surface de la section transversale qui est considérée transversalement à l'orientation axiale.

12. Elément adaptateur selon la revendication 11, **caractérisé en ce que** l'extrémité d'adaptateur (14) a une section transversale ronde.

13. Elément adaptateur selon la revendication 11, **caractérisé en ce que** l'extrémité d'adaptateur (14) a une section transversale anguleuse.
